# EUROPÄISCHE PATENTSCHRIFT

(11) **EP 1 124 774 B1**
(45) Veröffentlichungstag und Bekanntmachung des Hinweises auf die Patenterteilung: **18.12.2002**
(21) Anmeldenummer: 99969403.7
(22) Anmeldetag: 17.09.1999
(51) Int. Cl.: C04B 41/49, B28B 11/08

(54) **OBERFLÄCHENBEHANDELTE MINERALISCHE WERKSTOFFE UND VERFAHREN ZU IHRER HERSTELLUNG**
SURFACE-TREATED MINERAL MATERIALS AND METHOD FOR PRODUCING THEM
MATERIAUX MINERAUX DE SURFACE TRAITEE ET LEUR PROCEDE DE PRODUCTION

(30) Priorität: 22.09.1998 DE 19843498
(43) Veröffentlichungstag der Anmeldung: 22.08.2001
(73) Patentinhaber: Sievers, Thomas, 21337 Lüneburg (DE)
(72) Erfinder: SIEVERS, Thomas, D-21337 Lüneburg (DE); FAHRENKROG, Herbert, D-42659 Solingen (DE)
(74) Vertreter: Schupfner, Georg U.
(86) Internationale Anmeldenummer: DE9902966
(87) Internationale Veröffentlichungsnummer: WO00017129

(56) Entgegenhaltungen:
- DE-A- 2 053 110
- DE-C- 19 518 270

## Beschreibung

Gegenstand der Erfindung sind oberflächenbehandelte mineralische Werkstoffe und ein Verfahren zu ihrer Herstellung. Ein besonderes Anwendungsgebiet der Erfindung betrifft oberflächenoptimierte, insbesondere abrieboptimierte, schmutzhemmend und rutschfest ausgestattete Boden- und Wandbeläge aus Natur- und Kunststeinen für den Innen- und Außenbereich.

Ausrutschen ist eine der häufigsten Unfallursachen in Deutschland. Die Schwere solcher Unfälle wird meist unterschätzt. Zur Erhöhung der Trittsicherheit müssen Schuhsohlen und Fußböden rutschhemmend ausgestattet sein. Dies ist vor allem dort notwendig, wo gleitfördernde Medien auf den Bodenbelag gelangen. In vielen Bereichen des öffentlichen Lebens, wie z.B. auf Gehwegen und öffentlichen Plätzen aber auch im Privatbereich ist es üblich, gestrahlte, geflammte, gestockte, beschichtete, glatte oder sägerauhe, geschliffene und angeätzte Bodenbeläge sowohl in Trockenals auch in Naßbereichen und Übergangsbereichen einzusetzen. Zusätzlich zur Nutzung als Bodenbeläge werden diese Beläge auch an Wand- und Fassadenflächen vorzugsweise in Außen- aber auch in Innenbereichen eingesetzt. Dabei gilt es, die rutschhemmende Wirkung dauerhaft zu erhalten und gleichzeitig eine möglichst flekkunempfindliche, reinigungsfähige und abriebfeste Oberfläche, die wasserdampfdurchlässig, hydrophob und oleophob ausgestattet ist, zu erhalten.

Vielfach werden in Außen- und Innenbereichen Natur- und Kunststeine auf Bodenund an Wandflächen verlegt. Bei Bodenbelägen müssen hinsichtlich der Trittsicherheit verschiedene Normen eingehalten werden. Daher können in vielen Bereichen nur stark strukturierte Oberflächen eingesetzt werden. Diese Oberflächen haben produktionsbedingte Nachteile.

Die Bewertung der Oberflächen kann z.B. nach den folgenden genormten Verfahren erfolgen:
- DIN 51130, die Bestimmung der rutschhemmenden Eigenschaft für Arbeitsräume und Arbeitsbereiche mit Rutschgefahr,
- DIN 51097, die Bestimmung der rutschhemmenden Eigenschaft naßbelasteter Barfußbereiche - Begehungsverfahren,
- ASTM 1028, statischer Reibungskoeffizient (static coefficient of friction) oder
- ISO 10.545 part 17 (Method B: Static Slider).

Zur Herstellung bzw. Erhöhung der rutschhemmenden Eigenschaften von Fußböden sowie auch zur Herstellung verschiedener Oberflächenoptiken und Oberflächeneigenschaften existieren unterschiedliche Verfahren. Deren Einsatz hängt vorwiegend davon ab, wo und wie der Belag verwendet werden soll und welche Oberflächenoptik und Oberflächeneigenschaft der Bauherr wünscht. Im folgenden werden die wichtigsten Verfahren kurz beschrieben:

### 1. Strahlen

Beim Strahlen wird ein, der gewünschten Rauheit entsprechendes, Strahlgut mit hohem Druck auf die Oberfläche geschleudert. Das mehr oder weniger harte Strahlgut führt zu einer unregelmäßigen, mit Mikrorauheiten versehenen Aufrauhung und starken Mattierung der Oberfläche. Zusätzlich haften produktionsbedingte Feinstäube in oder auf den Gefügegemengungen mehr oder weniger dauerhaft an der Steinoberfläche an.

### 2. Flammstrahlen

Beim Flammstrahlen werden hochenergetische Brenngas-Sauerstoff-Flammen erzeugt, mit denen die zu behandelnde Oberfläche kurzzeitig stark erhitzt wird. Durch die Einwirkung der Flammen erfolgt in der obersten Gesteinszone ein Sprengen des Quarzes sowie ein Schmelzen von Gesteinsteilen, die anschließend glasartig erstarren und verhältnismäßig lose auf der Oberfläche haften und bei der Nutzung abplatzen.

### 3. Stocken

Das Stocken erfolgt unter Verwendung eines Stockwerkzeuges (Stockhammers), welches mit mehreren, gleichmäßig angeordneten Meißelspitzen versehen ist. Während einer kontinuierlichen Werkstückbewegung wird der Stockhammer mit einer bestimmten Frequenz auf die Oberfläche geschlagen. Hierdurch erfolgt eine von den Gesteinsteilen abhängige, mehr oder weniger große Gefügeerschütterung mit Abplatzungen und losen oder fester anhaftenden Gesteinsteilen. Produktionsbedingt haften Feinststäube in oder auf den Gefügegemengen mehr oder weniger fest an.

### 4. Oberflächenbeschichtung

Die Beschichtung von Oberflächen kann so vorgenommen werden, daß die Oberfläche z.B. mit Noppen versehen wird und hierdurch eine Erhöhung der Rutschfestigkeit erzielt wird. Der Stein wird in der gesamten Oberfläche verschlossen. Dies hat nach der Verlegung den Nachteil, daß aus der Verlegung stammendes Wasser abgesperrt wird und durch aufsteigendes Wasser der Stein beschädigt wird (es entstehen unter anderem Dampfdrücke, die den Stein zersprengen können). Die Veränderung der optischen Eigenschaft steht im Zusammenhang mit der verwendeten Beschichtung, die Methode ist auf Bodenbelägen nur begrenzt haltbar, da sich ein Abrieb nicht vermeiden läßt.

### 5. Gatterrauh

Bei der Rohsteinbearbeitung (Blöcke aus Natur- und Kunststein) werden die Blöcke mittels Stahlsägeblätter unter Zufuhr eines Stahl-/Sandgemisches zu Rohtafeln aufgeschnitten. Hierdurch erhält man eine unregelmäßig rauhe Oberfläche. Produktionsbedingt haften in oder an der Gesteinsoberfläche Feinstäube sowie Rückstände des Stahlsandgemisches. Je nach Gesteinsart und der vorhandenen Rückstände werden bei Kontakt mit Wasser Korrossionsprozesse in Gang gesetzt, welche teilweise, in Abhängigkeit der Einwirkzeit, zu Gefügesprengungen und Verfärbungen führen können.

### 6. Sägerauh

Bei der Rohsteinbearbeitung (Blöcke aus Natur- und Kunststein) werden die Blöcke mittels diamantbestückter Metallsägeblätter direkt auf Formatgröße geschnitten. Hierdurch erhält man eine mit einem Grobschliff vergleichbare Oberfläche. Durch die sich schnell drehende Trennscheibe sowie durch die permanente Wasserzufuhr wird der produktionsbedingte Feinstaub in das naturbedingte Gesteinsoberfächengefüge gepreßt. Diese Feinstäube haften teilweise fest in den Gesteinsgefügen, lösen sich allerdings bei Bodenbelägen durch deren Benutzung.

### 7. Chemische Anätzung

Bei der chemischen Anätzung von Steinoberflächen (mittels flußsäurehaltiger Substanzen) werden in der Regel zuerst die weichen Anteile ausgewaschen. Die chemische Zusammensetzung und Konzentration muß dem Steinbelag angepaßt werden, um unerwünschte Schädigungen wie z.B. Ausrostungen zu verhindern Es entstehen gesundheitsschädliche Dämpfe bei der Bearbeitung.

### 8. Schleifen und/oder Polieren

Behandlung der Oberflächem mittels eines abrasiven Mediums wie Diamantstaub, Bornitrid oder Korund (Elektrokorund).

Die beschriebenen Verfahren oder ähnliche Verfahren, die Abrasivmittel bzw. meißelartige Werkzeuge benutzen, führen zwar zur Erhöhung der Trittsicherheit, aber auch zu Gefügeerschütterungen und Gefügeplatzungen und produktionsbedingten, teilweise festanhaftenden Feinststaubablagerungen. Nachteilig ist es auch, daß für einige Verfahren die Rutschfestigkeit erst durch eine Nachbehandlung am Einsatzort herstellbar ist.

Aus der DE 195 18 270 ist ein oberflächenbehandelter rutschfester Fußbodenbelag bekannt, der einige der oben erwähnten Nachteile nicht aufweist. Ein solcher Fußbodenbelag wird durch Aufbringen von statistisch verteilten Mikrokratern, die für das menschliche Auge unsichtbar sind, auf die Oberfläche des Fußbodenbelages mittels eines Lasers hergestellt.

Aus der DE-A-2 053 110 ist ein Verfahren zur Behandlung mineralischer Oberflächen bekannt, worin die Oberfläche zunächst hydromechanisch und nachfolgend mit hydrophobierenden siliciumorganischen Verbindungen behandelt wird. Auch solchermaßen behandelte Oberflächen weisen jedoch noch nicht die gewünschte Schmutzunempfindlichkeit auf.

Aufgabe der Erfindung ist es, hoch rutschfeste, fleckunempfindliche und beständige, abriebfeste, witterungsbeständige, von Feinststaub befreite und ggf. zum Beispiel durch Polieren veredelte Oberflächen von mineralischen Werkstoffen zu schaffen, die sämtliche Nachteile des Standes der Technik nicht aufweisen.

Die Aufgabe wird erfindungsgemäß gelöst durch Bereitstellung eines zumindest zweistufigen Verfahrens zur Oberflächenbehandlung von mineralischen Werkstoffen, das folgende Schritte aufweist:
(a) Einwirken von Laserstrahlung auf die Oberfläche und
(b) Aufbringen einer siliciumorganischen Verbindung auf die Oberfläche.

Gegenstand der Oberflächenbehandlung sind mineralische Werkstoffe wie: Natursteine, Kunststeine z.B. kunstharzgebundene oder zementgebundene mineralische Agglomerate, Keramik oder keramische Werkstoffe, Steingut und Steinzeug. Die oben genannten Schritte sind Teil eines im wesentlichen zeitlich abgeschlossenen Behandlungsverfahrens und erfolgen vor der Weiterverarbeitung/Verwendung als mineralische Werkstoffe/Baustoffe.

Gegenstand des erfindungsgemäßen Verfahrens können unbehandelte oder vorbehandelte mineralische Werkstoffe sein. Teil der Vorbehandlung der Oberfläche kann eine Oberflächenbearbeitung in Form von Strahlen, Flammen, Stocken, Beschichten, Gattern, Sägen, Schleifen und/oder Ätzen wie oben ausgeführt sein. Weiterhin werden die Oberflächen zweckmäßigerweise durch eine mechanische Oberflächenreinigung wie Bürsten, Waschen oder Abblasen vor einem der oben ausgewiesenen erfindungswesentlichen Schritte (a) und (b) von lose anhaftenden Partikeln befreit.

Ggf. solchermaßen vorbehandelte Werkstücke werden dem im folgenden näher beschriebener, Schritt (a) der Laserbehandlung ausgesetzt.

Schritt (a) Laserbehandlung

Erfindungsgemäß wird ein Oberflächenabtrag loser Teilchen, ein "Verschweißen" bzw. eine Glättung vorhandener Mikrorisse durch Einwirkung von Laserstrahlung, insbesondere Laserimpulsen, vorgenommen. Hierdurch wird eine aufnahmefähige Oberfläche für die vorzugsweise nachfolgende Imprägnierung erzielt.

Wesentliche Parameter der Laserbehandlung sind:
- Arbeitsfleckdurchmesser, d.h. laterale Ausdehnung der laserinduzierten Oberflächenvertiefung,
- Pulsdauer (Einwirkzeit) und Pulsenergie, d.h. Tiefe der laserinduzierten Oberflächenvertiefung und im Zusammenhang mit der Wellenlänge des Lasers die Art der Wechselwirkung, d.h. Verdampfen / Schmelzen, sowie der
- Abstand der Einwirkstellen, d.h. Anzahl und Anordnung der laserinduzierten Oberflächenvertiefung,

Form, Tiefe und Breite der laserinduzierten Oberflächenvertiefung sind vorzugsweise so einzustellen, daß eine linsenförmige flache Vertiefung entsteht. Eine linsenfömige Vertiefung im Sinne der Erfindung ist eine Vertiefung, deren maximale Tiefe die halbe gemittelte laterale Ausdehnung des tiefsten Punktes der Vertiefung nicht übersteigt.

Diese Parameter sind steuerbar und können dem jeweiligen Werkstoff und dem vorzugsweise nachgeschalteten Schritt der Oberflächenbehandlung mit einer siliciumorganischen Verbindung zur Steuerung der Aufnahmefähigkeit der Oberfläche des mineralischen Werkstoffes angepaßt werden. Die oben genannten Parameter sind vorzugsweise so zu steuern, daß der Materialabtrag im wesentlichen über die zu bearbeitende Oberfläche gleichmäßig verteilt und im wesentlichen durch Verdampfung erfolgt. Es soll praktisch erreicht werden, unter Berücksichtigung der Werkstoffabhängigkeit, eine hohe Energie in sehr kurzer Zeit einzutragen. Im Falle der Behandlung mineralischer Oberflächen aus Naturstein (z.B. Granit) betragen die Pulsenergie vorzugsweise von 0,4 mJ bis 1,5 mJ, die Pulsdauer vorzugsweise von 30 ns bis 400 ns.

Die Laserstrahlung kann mit Hilfe von Röntgenlasern, Feststoff-Lasern wie einem Nd-YAG-Laser oder HD-Lasern, Flüssigkeits-Lasern oder Gas-Lasern, wie einem CO₂-Laser, erzeugt werden. Vorzugsweise werden gepulste Laser eingesetzt.

Erfindungsgemäß werden durch gezielte Einwirkung von Impulslaserstrahlen vorzugsweise linsenförmige Oberflächenvertiefungen erzeugt. Produktionsbedingt vorhandene Gefügeriße werden durch die Einwirkung von flächendeckender punktueller Erhitzung von Mikrobereichen in Millisekunden geglättet bzw. verschweißt und lose oder fest anhaftende Feinststäube werden verdampft. Die Laserparameter, wie z.B. Energiedichte, Pulsdauer usw., werden in Abhängigkeit vom Werkstoff des Fußbodenbelages vorzugsweise so gewählt, daß der Materialabtrag zur Erzeugung der Oberflächenvertiefung, der Verglättung der Oberfläche, dem Verschweißen von Gesteinsgefüge sowie dem Verdampfen der Feinststäube im wesentlichen durch Verdampfung erfolgt.

Die Ablenkung des Laserstrahls über die Oberfläche erfolgt mit an sich bekannten Baugruppen, wie diese z.B. aus dem Lasereinsatz zum Beschriften oder zur Oberflächeninspektion bekannt sind (Scanner und Polygonspiegel in Verbindung mit Planfeldoptiken).

Im Gegensatz zu den Verfahren Flammen, Stocken, Gattern und Strahlen handelt es sich bei der Laserfeinststrukturierung um eine berührungslose Bearbeitung (Weiterbearbeitung) der Oberfläche. Die Folgen der mechanischen Gefügeerschütterungen werden durch das erfindungsgemäße Verfahren beseitigt. Die produktionsbedingten Anhaftungen von Feinststäuben und mehr oder weniger losem Gesteinsgemenge werden durch die Laserbearbeitung verdampft oder abgesprengt, so daß eine aufnahmefähige Oberfläche für die, vorzugsweise nachfolgende, Oberflächenbehandlung mit siliciumorganischen Verbindungen geschaffen ist. Der Verfahrensschritt der Laserbearbeitung zeichnet sich weiterhin durch eine gute Steuerbarkeit der Parameter aus, d.h. Dichte, Tiefe und Durchmesser der Mikroporen, Verschweißen und Verglätten der Oberfläche lassen sich durch computergesteuerte Einsatz der Laserparameter auf die jeweiligen Anforderungen der verschiedenen Oberflächen und Steine einstellen.

Die rutschhemmende Eigenschaft der z.B. vorher ggf. gestrahlten, geflammten, gestockten, beschichteten, gatter- oder sägerauhen, geschliffenen und / oder angeätzten Oberfläche wird durch die Laserbearbeitung nicht negativ beeinflußt, sondern in der Regel erhöht. Die nationalen und internationalen Grenzwerte für rutschhemmende Oberflächen werden erreicht bzw. übertroffen. Ein Zerstören der makroskopischen Oberfläche der Steine kann sicher ausgeschlossen werden. Dies wird erreicht, indem sich auf der Oberfläche Vertiefungen (Mikrokrater) mit Saugnapfwirkung, die vorzugsweise ganzflächig, möglichst flach und vorzugsweise für das menschliche Auge unsichtbar sind, unregelmäßig statistisch verteilt befinden. Unsichtbar bedeutet in diesem Fall, daß die Oberflächenvertiefungen aus einer bestimmten Entfernung aufgrund des Auflösungsverhaltens des menschlichen Auges nicht als solche erkannt werden. Die Auflösungsschwelle wird beim normalsichtigen Beobachter unter optimalen Beleuchtungsverhältnissen bei etwa einer Winkelminute angenommen. Das heißt, daß aus einem minimalen Beobachtungsabstand von 1,5 m (aufrechtgehender, erwachsener Mensch) ein Krater mit einer maximalen lateralen Ausdehnung von 0,44 mm gerade noch gesehen werden kann.

Vorzugsweise weisen die laserinduzierten Oberflächenvertiefungen (Mikrokrater) einen Durchmesser von 5 bis 900 µm, besonders bevorzugt 10 bis 150 µm, und eine Tiefe von 10 bis 400 µm, besonders bevorzugt von 20 bis 200 µm auf. Vorteilhafterweise weist die Oberfläche (hypothetische völlig plane Oberfläche) zumindest 2,5 Mio. laserinduzierte Oberflächenvertiefungen pro m² auf, vorzugsweise 3,5 bis 20 Mio. laserinduzierte Oberflächenvertiefungen pro m². Weiterhin sollte der Abstand der Oberflächenvertiefungen nicht größer sein als 10 bis 250 µm sein (bestimmt anhand des kleinsten Abstandes des Umfanges zweier Oberflächenvertiefungen). Die laserinduzierten Oberflächenvertiefungen können auch überlappen.

Bei Verwendung eines nicht gepulsten Lasers, wie z.B. eines CO₂-Lasers, kann die Oberfläche auch mit einem Laserstahl variablen Durchmessers ohne direkte Porenerzeugung behandelt werden. Eine solche Behandlung kann als kontinuierlicher Schmelzvorgang an der Oberfläche angesehen werden. Eine solchermaßen behandelte Oberfläche weist ggf. die oben ausgewiesen laserinduzierten Oberflächenvertiefungen nicht auf.

Schritt (b): flächiges Aufbringen einer siliciumorganischen Verbindung (im folgenden als Imprägnierung bzw. Imprägnierer bezeichnet)

Imprägnierer ist eine siliciumorganische Verbindung oder eine Zusammensetzung enthaltend diese. Eine siliciumorganische Verbindung im Sinne der Erfindung ist eine Verbindung, die zumindest eine Silicium-Sauerstoff-Kohlenstoff Bindungssequenz pro Molekül und/oder zumindest eine Silicium-Kohlenstoff-Bindung pro Molekül aufweist. Geeignete siliciumorganische Verbindungen sind auch solche, die mehrere Siliciumatome enthalten, von denen zumindest zwei über ein Sauerstoffatom, eine Sauerstoff-Kohlenwasserstoff-Bindung, eine Sauerstoff-Kohlenwasserstoff-Sauerstoff-Bindung oder über eine Kohlenwasserstoff-Bindung verknüpft sind. Daneben kann die siliciumorganische Verbindung auch funktionelle Gruppen wie z.B. Halogen, insbesondere Hydroxy-, Chlor-, Amino-, Carboxy-, Cyano-, Methacryloxy-, Epoxy-, Mercapto- oder Vinylgruppen tragen. Geeignete siliciumorganische Verbindungen sind u.a. Alkylsilanole, Alkylalkoxysilane, Alkoxysilane, Oligo- und Polysiloxane und Silicone. Weiterhin können die siliciumorganischen Verbindungen auch Metallatome wie Zirkonium, Aluminium oder Titan enthalten, z. B. in Form von Si-O-M, Si-O-Alkylen-O-M, Si-Alkylen-O-M Bindungen (M = Al, Zr oder Ti). Die siliciumorganische Verbindung enthält vorzugsweise überwiegend, besonders bevorzugt zu mindestens 80 Atom%, insbesondere zu mindestens 90 Atom%, Silicium-, Sauerstoff-, Kohlenstoff- und Wasserstoffatome.

Besonders bevorzugt ist der Imprägnierer eine wäßrige Dispersion der siliciumorganischen Verbindung in Wasser. Gegenstand einer solchen Zusammensetzung kann auch ein Dipergierhilfsmittel sein. Die siliciumorganische Verbindung kann aber auch in einem Kohlenwasserstoff-Medium wie Testbenzin aufgenommen werden.

Als besonders vorteilhafter Imprägnierer hat sich eine Dispersion eines Alkylalkoxysilans und eines Fluorpolymeren in Wasser erwiesen, wie diese von der Wacker Chemie GmbH unter dem Namen Wacker BS29 (0142200) vertrieben wird. Ebenso - jedoch weniger gut geeignet - läßt sich ein Produkt namens Wacker BS 28 einsetzen.

Der Vorteil einer Steinvorbearbeitung durch Lasereinwirkung besteht u.a. in der dadurch verursachten gleichmäßigen Aufnahme der Imprägnierung, da die Oberfläche durch den ersten Verfahrensschritt frei von jeglichen Verschmutzungen und Ablagerungen wird und die Imprägnierung in die natürlichen Hohlräume des Steingefüges eindringen kann.

Die mit dieser Imprägnierung versehene Oberfläche ist in der Wasserdampfdiffusion nicht oder kaum eingeschränkt. Das bedeutet, daß der Baustoff weiterhin, wie im unimprägnierten Zustand, aus der Unterseite "atmen" (diffundieren) kann. Die Oberfläche wird durch die hydrophobe und oleophobe Wirkung des Imprägniermittels gegen Wasseraufnahme und Verunreinigungen durch z.B. Fett, Öl, Farbe, Kaffee, Cola, Tee, Urin, Rotwein, und saurem Regen geschützt bzw. eine solche Verunreinigung kann leichter entfernt werden, da sie nicht in das Gesteinsgefüge eindringen kann.

Die Imprägnierung nach der Laserbearbeitung hat weiterhin den Vorteil gegenüber einer Imprägnierung, der nicht nach Schritt (a) behandelten gestrahlten, geflammten, gestockten, beschichteten, gatter- oder sägerauhen, geschliffenen und angeätzten Steinoberfläche, daß sie auf Wasserbasis aufgebaut sein kann. Herkömmliche, nach der Verlegung angewendete Imprägnierer, sind auf Testbenzinbasis aufgebaut und bergen bei der Verwendung Gesundheits- und Umweltgefahren. Ohne vorherige Laserbearbeitung kann der Imprägnierer nicht gleichmäßig in das Gesteinsgefüge eindringen und haftet an den produktionsbedingten Feinststäuben und Restschmutz. Bei der Nutzung solchermaßen ohne vorherige Lasereinwirkung imprägnierter Beläge können die lose anhaftenden Feinpartikel mitsamt der Imprägnierung gelöst werden. Die Imprägnierwirkung wird somit aufgebrochen und aufgehoben.

Das Auftragen des Imprägnierers erfolgt vorzugsweise mittels einer Dosiervorrichtung und flächigem Auftrag des Imprägniers / der Imprägnierzusammensetzung. Nach einer bevorzugten Ausgestaltung wird der vorzugsweise flüssige Imprägnierer / die Imprägnierzusammensetzung mittels die Flüssigkeit gleichmäßig abgebender Rollen auf die Oberfläche des mineralischen Werkstoffes aufgebracht. Der Imprägnierer wird so aufgebracht, daß eine gleichmäßige Eindringtiefe gewährleistet ist und verhindert wird, daß Überschüsse sich auf der Oberfläche ablagern.

Das Verfahren kann dahingehend verbessert werden, daß im Anschluß an die Laserbearbeitung und Imprägnierung eine weitere Bearbeitung mittels thermischer Hitze, Mikrowellenbehandlung, UV- oder IR-Strahlung oder Laserbearbeitung durchgeführt wird, wobei entweder bei milden Temperaturen eine Rekristallisation der Oberfläche oder bei hohen Temperaturen eine Verschmelzung der siliciumorganischen Verbindung mit dem Trägermaterial erfolgt. Nach einer bevorzugten Ausgestaltung der Erfindung wird eine Grenztemperatur von z.B. 75°C auf der Oberfläche des mineralischen Werkstoffes vorzugsweise nicht überschritten.

Nach einer weiteren Ausgestaltung des Verfahrens wird die Steinoberfläche nach der Laserbehandlung und vor der Imprägnierung einer hydromechanischen Nachbehandlung gemäß der DE 197 15 937 ausgesetzt. Hierbei wird auf die Oberfläche des mineralischen Werkstoffes eine, vorzugsweise saure, Waschlösung, vorzugsweise unter Einwirkung einer Vorrichtung zur mechanischen Oberflächenreinigung, wie einer Bürste, aufgebracht. Es ist weiterhin bevorzugt, nach Einwirkung derselben auf die Oberfläche, diese Waschlösung durch eine zweite aufzubringende Waschlösung zu entfernen / abzuspülen bzw. zu neutralisieren.

Weiterhin ist es vorteilhaft, die Oberfläche vor Aufbringen des Imprägnierers zu erwärmen. Dieser Verfahrensschritt bereitet die Oberfläche für das Aufbringen des Imprägnierers vor. Die Oberflächenerwärmung kann so durchgeführt werden, daß selektiv bestimmte Bereiche der Oberfläche, d.h. punktförmige oder flächige Bereiche und/oder insbesondere bestimmte Schichten der Oberfläche erwärmt werden (z.B. über 25°C oder über 35°C).

Nach einer weiteren Ausgestaltung des Verfahrens kann vor, nach und vorzugsweise mit dem Imprägnierschritt bzw. in der Imprägniererzusammensetzung ein farbverändernder, farbvertiefender Zusatz wie ein Glanzbildner, ein Farbpigment oder ein (löslicher) Farbstoff auf die Oberfläche aufgebracht werden. Dieser Zusatz kann ggf. auch an den Imprägnierer chemisch gebunden sein.

Die erfindungsgemäß hergestellten Oberflächen zeichnen sich z.B. durch ein vermindertes Aufnahmevermögen für Wasser aus. Vorzugsweise werden im Vergleich mit einer unbehandelten Oberfläche (d.h. einer Oberfläche bevor sie dem erfindungsgemäßen Verfahren ausgesetzt wurde) von der erfindungsgemäß behandelten Oberfläche zumindest 50 Gew.% weniger Wasser aufgenommen.

Das erfindungsgemäße Verfahren beinhaltet ein flexibles, umweltfreundliches Verfahren zur Herstellung von bedarfsgerechten und anforderungegemäßen Belagsoberflächen, welches hinsichtlich der Abriebsfestigkeit, Fleckempfindlichkeit, Wasseraufnahme, Mikrobruchbefreitheit und Rutschfestigkeit Vorteile gegenüber herkömmlichen Oberflächen aufweist. Ein großer Vorteil des erfindungsgemäßen Verfahrens ist, daß es problemlos in den Fertigungsprozeß der Beläge integrierbar ist. Im Vergleich zu einer unbearbeiteten mineralischen Oberfläche werden folgende Eigenschaften verbessert: Abriebfestigkeit, Fleckempfindlichkeit, Oberflächenverdichtung und Mikrobrüche werden verglättet / verschweißt.

Der mineralische Werkstoff weist demnach laserinduzierte Oberflächenvertiefungen und eine laserinduzierte Glättung der Oberfläche auf, wobei im Falle der Verwendung eines nicht gepulsten Lasers ein laserinduzierter Oberflächenabtrag in "Linienform" erfolgt und keine punktförmigen Oberflächenvertiefungen erzeugt werden. Die siliciumorganische Verbindung ist auf der mineralischen Oberfläche, insbesondere in den oberflächennahen Porenräumen des mineralischen Werkstoffes, ggf. sogar je nach Gestein bis zu einer Tiefe von 0,5 bis 1 cm nachweisbar. Bei einer Nachbehandlung der Imprägnierung mit höherer Energie ist ein Umsetzungsprodukt der siliciumorganischen Verbindung mit der Oberfläche des mineralischen Werkstoffes bzw. ein thermisches Zersetzungsprodukt nachweisbar.

Da die Imprägnierung in das Gesteinsgefüge eindringt und nicht auf losen Teilen anliegt, welche sich bei der Nutzung abreiben und lösen, weist die Oberfläche der mineralischen Werkstoffe auch nach anhaltender Nutzung ein optisch gleiches Erscheinungsbild auf. Dies bedeutet auch, daß im Fall von Bodenbelägen der Architekt oder Bauherr sich vor der Verlegung z.B. eines Natursteinbelages von dessen Eigenschaften überzeugen kann und eine nachträgliche Behandlung und damit verbundene optische Veränderung des Fußbodens nicht notwendig oder sogar in den meisten Fällen nicht möglich ist.

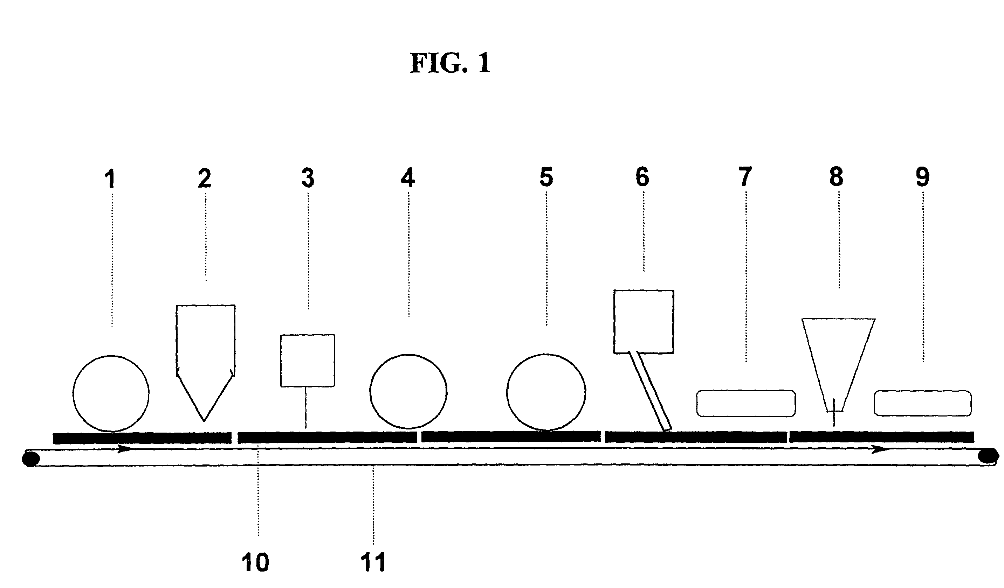

Im folgenden wird der Verfahrensverlauf beispielhaft unter Bezugnahme auf Figur 1 erläutert.
1 Bürste zum Abtrag von Trockenschmutz. Bürstrichtung vorzugsweise entgegen der Bandrichtung
2 Lasereinheit
3 Dosierstation für Waschlösung enthaltend Tenside, Säuren und/oder Laugen,
4 Waschbürststation nach dem Auftrag der Waschlösung. Bürstrichtung vorzugsweise entgegen der Bandrichtung, ggf. können nach der Waschbürststation 4 weitere Dosierstationen für Waschlösung und Waschbürststation folgen (nicht dargestellt)
5 Waschbürststation zum restlosen Entfernen der anhaftenden bzw. durch die vorhergehenden Stationen gelösten Bestandteile. Bürstrichtung einstellbar auf gegenläufig oder mit dem Band laufend. Geschwindigkeit und Art und Form der Bürsten sind variabel.
6 Absaugvorrichtung zum Absaugen der gelösten Bestandteile und von Flüssigkeitsresten.
7 Trockenstation, Trocknung mittels Microwellen, Infrarot, Heißluft, Laserbearbeitung oder thermischer Hitze.
8 Imprägnierdosiereinheit: flächiger Auftrag des Imprägnierers
9 Trockenstation, Trocknung mittels Microwellen bzw. Infrarot, Heißluft, Laserbearbeitung oder thermischer Hitze, z.B. mittels Luftzufuhr.
10 Werkstück auf dem Förderband
11 Fördereinrichtung

### Ausführungsbeispiel:

Forderung: Fußbodenbelag aus Naturstein, rutschhemmend bei Einwirkung von gleitfördernden Stoffen nach bestehenden Normen, schmutzunempfindliche, gegen Wasser-/ und Ölaufnahme imprägnierte hydrophobe und oleophobe Oberfläche, Verlegung im Bahnhofsaußen- und -/innenbereich.

### Realisierung:

Oberflächenbearbeitung mittels Nd-YAG-Laser, Energiedichte 19 J/cm², Pulsdauer 100 ns, Brennweite 300 mm, Fokussierung auf Werkstoffoberfläche, Relativbewegung zwischen Laserfocus und Werkstück erfolgt vorzugsweise durch eine Ablenkoptik in y-Richtung und durch Werkstücktransport in x-Richtung, 1 Impuls je zu erzeugendem Mikrokrater, erzeugter Kraterdurchmesser im Bereich von 0,2 - 0,8 mm, Abstand der Krater in x- und y-Richtung 0,1 mm , erzeugte Tiefe 0,05 mm.

Nachfolgend mechanische Reinigung durch Abbürsten und Absaugen größerer Staubteile, Abwaschen der Oberfläche mittels rotierender Bürsten unter Verwendung von Säuren und Laugen, Trocknung, Imprägnierung durch flächigen Auftrag einer wäßrigen Dispersion enthaltend Alkylalkoxysilan und Fluorpolymer (Wacker BS 29) und abschließende thermische Trocknung.

## Patentansprüche

1. Verfahren zur Oberflächenbehandlung von mineralischen Werkstoffen umfassend zumindest die folgenden Schritte
(a) Einwirken von Laserstrahlung auf die Oberfläche und
(b) Aufbringen einer siliciumorganischen Verbindung auf die Oberfläche,
wobei die oben genannten Schritte (a) und (b) Teil eines im wesentlichen zeitlich abgeschlossenen Behandlungsverfahrens sind und vor der Weiterverarbeitung bzw.
Verwendung der mineralischen Werkstoffe erfolgen.

2. Verfahren gemäß Anspruch 1, **dadurch gekennzeichnet, daß** man durch Einwirkung der Laserstrahlung laserinduzierte Oberflächenvertiefungen mit einem mittleren Durchmesser von 5 bis 900 µm, besonders bevorzugt von 10 bis 150 µm erzeugt.

3. Verfahren gemäß einem der vorhergehenden Ansprüche, **dadurch gekennzeichnet, daß** man durch Einwirkung der Laserstrahlung laserinduzierte Oberflächenvertiefungen mit einer mittleren Tiefe von 10 bis 400 µm, besonders bevorzugt von 20 bis 200 µm erzeugt.

4. Verfahren gemäß einem der vorhergehenden Ansprüche, **dadurch gekennzeichnet, daß** man durch Einwirkung der Laserstrahlung zumindest 2,5 Mio. laserinduzierte Oberflächenvertiefungen pro m² erzeugt.

5. Verfahren gemäß einem der vorhergehenden Ansprüche, **dadurch gekennzeichnet, daß** man als siliciumorganische Verbindung Alkylsilanole, Alkylalkoxysilane, Alkoxysilane, Oligo- und Polysiloxane und/oder Silicone aufträgt, die ggf. eine oder mehrere der folgenden funktionellen Gruppen aufweisen: Hydroxy- , Halogen-, insbesondere Chlor-, Amino-, Carboxy-, Cyano-, Methacryloxy-, Epoxy-, Mercapto- oder Vinylgruppen.

6. Verfahren gemäß einem der vorhergehenden Ansprüche, **dadurch ge-kennzeichnet, daß** man die siliciumorganische Verbindung in Form einer wäßrigen Dispersion aufträgt.

7. Verfahren gemäß einem der vorhergehenden Ansprüche, **dadurch gekennzeichnet, daß** man die siliciumorganische Verbindung in Form einer wäßrigen Dispersion enthaltend ein Dispergierhilfsmittel aufträgt.

8. Verfahren gemäß einem der vorhergehenden Ansprüche, **dadurch gekennzeichnet, daß** man die siliciumorganische Verbindung in Form einer wäßrigen Dispersion zusammen mit einem Fluorpolymeren aufträgt.

9. Verfahren gemäß einem der vorhergehenden Ansprüche, **dadurch gekennzeichnet, daß** man dem Aufbringen einer siliciumorganischen Verbindung eine Oberflächenbehandlung mittels thermischer Energie, UV- oder IR-Strahlung, Mikrowellen und/oder Lasern nachschaltet.

10. Mineralischer Werkstoff hergestellt nach einem Verfahren der Anspruch 1 bis 9, **dadurch gekennzeichnet, daß** dieser
(A) laserinduzierte Oberflächenvertiefungen, einen laserinduzierten Oberflächenabtrag und/oder eine laserinduzierte Glättung der Oberfläche und
(B) eine siliciumorganische Verbindung auf der Oberfläche bzw. in den oberflächennahen Porenräumen des mineralischen Werkstoffes
aufweist.

11. Mineralischer Werkstoff gemäß Anspruch 10, **dadurch gekennzeichnet, daß** die laserinduzierten Oberflächenvertiefungen eine mittlere Tiefe von 10 bis 400 µm, besonders bevorzugt von 20 bis 200 µm, aufweisen.

12. Mineralischer Werkstoff gemäß einem der Ansprüche 10 oder 11, **dadurch gekennzeichnet, daß** die laserinduzierten Oberflächenvertiefungen einen mittleren Durchmesser von 5 bis 900 µm, besonders bevorzugt von 10 bis 150 µm, aufweisen.

13. Mineralischer Werkstoff gemäß einem der Ansprüche 10 bis 12, **dadurch gekennzeichnet, daß** die Oberfläche zumindest 2,5 Mio. laserinduzierte Oberflächenvertiefungen pro m² aufweist.

## Claims

1. A process for surface treatment of mineral materials including at least the following steps
a) effect of laser radiation onto the surface and
b) application of an organo-silicide composition onto the surface,
with the above-mentioned steps (a) and (b) being part of an treatment process essentially limited in time and which occur prior to further processing and/or use of said mineral materials.

2. A process according to claim 1, **characterized in that** by means of the effect of laser radiation laser induced surface indentations are created with an average diameter of 5 to 900 µm, particularly preferred between 10 to 150 µm.

3. A process according to one of the preceding claims, **characterized in that** by the effect of laser radiation laser induced indentations are created with an average depth between 10 to 400 µm, particularly preferred between 20 to 200 µm.

4. A process according to one of the preceding claims, **characterized in that** by the effect of laser radiation at least 2.5 million surface indentations per m² are created.

5. A process according to one of the preceding claims, **characterized in that** as an organo-silicide composition alkylsilanole, alkylalkoxysilane, alkoxysilane, oligo and polysiloxane and/or silicone is applied, sometimes having one or several of the following functional groups: hydroxy, halogen, in particular, chlorine, amino, carboxy, cyano, mathacryloxy, epoxy, mercapto, or vinyl.

6. A process according to one of the preceding claims, **characterized in that** the organo-silicide composition is applied in the form of an aqueous dispersion.

7. A process according to one of the preceding claims, **characterized in that** the organo-silicide composition is applied in the form of an aqueous dispersion containing a disperging supporting agent.

8. A process according to one of the preceding claims, **characterized in that** the organo-silicide composition is applied in the form of an aqueous dispersion together with a fluor polymer.

9. A process according to one of the preceding claims, **characterized in that** subsequently to the application of the organo-silicide composition a surface treatment is performed by means of thermal energy, UV- or IR-radiation, microwaves and/or lasers.

10. A mineral material produced according to a process of claims 1 through 9, **characterized in that** it is provided with
A) laser induced surface indentations, a laser induced surface removal and/or a laser induced smoothening of the surface and
B) an organo-silicide composition onto the surface and/or in the pore space of the mineral material near to the surface.

11. A mineral material according to claim 10, **characterized in that** the laser induced surface indentations are provided with an average depth of 10 to 400 µm, particularly preferred between 20 to 200 µm.

12. A mineral material according to claim 10 or 11, **characterized in that** the laser induced surface indentations are provided with an average diameter between 5 and 900 µm, particularly preferred between 10 and 150 µm.

13. A mineral material according to claims 10 through 12, **characterized in that** the surface is provided with at least 2.5 million laser induced surface indentations per m².

## Revendications

1. Procédé de traitement de surface de matières minérales comprenant au moins les phases suivantes :
(a) intervention du rayonnement laser sur la surface et
(b) dépôt d'un composé organosilicique sur la surface,
les phases (a) et (b) désignées ci-dessus faisant partie d'un procédé de traitement pour l'essentiel déjà écoulé dans le temps et ayant lieu avant traitement ou utilisation ultérieure des matières minérales.

2. Procédé selon la revendication 1, **caractérisé en ce que** l'on produit par intervention du rayonnement laser des cavités de surface réalisées au laser d'un diamètre moyen de 5 à 900 µm, en particulier de préférence de 10 à 150 µm.

3. Procédé selon l'une des revendications précédentes, **caractérisé en ce que** l'on produit par intervention du rayonnement laser des cavités de surface réalisées au laser d'une profondeur moyenne de 10 à 400 µm, en particulier de préférence de 20 à 200 µm.

4. Procédé selon l'une des revendications précédentes, **caractérisé en ce que** l'on produit par intervention du rayonnement laser au moins 2,5 millions de cavités de surface réalisées au laser par m².

5. Procédé selon l'une des revendications précédentes, **caractérisé en ce que** l'on dépose comme composé organosilicique, des alcoylsilanols, des alcoylalcoxysilanes, des oligo- et polysiloxanes et/ou du silicone, qui présentent le cas échéant un ou plusieurs des groupes fonctionnels suivants : Groupes hydroxy, halogène, en particulier les groupes chlore, amine, carboxyde, cyanure, méthacryloxyde, époxyde, mercaptide ou vinyle.

6. Procédé selon l'une des revendications précédentes, **caractérisé en ce que** l'on dépose le composé organosilicique sous la forme d'une dispersion aqueuse.

7. Procédé selon l'une des revendications précédentes, **caractérisé en ce que** l'on dépose le composé organosilicique sous la forme d'une dispersion aqueuse contenant un agent dispersant.

8. Procédé selon l'une des revendications précédentes, **caractérisé en ce que** l'on dépose le composé organosilicique sous la forme d'une dispersion aqueuse en même temps qu'un polymère fluoré.

9. Procédé selon l'une des revendications précédentes, **caractérisé en ce que** l'on réalise en aval de l'application du composé organosilicique, un traitement de surface au moyen de l'énergie thermique, de rayons ultraviolets ou infrarouges.

10. Matière minérale fabriquée selon un procédé conformément aux revendications 1 à 9, **caractérisée en ce que** :
(A) celle-ci présente des cavités de surface réalisées au laser, un enlèvement de surface réalisé au laser et/ou un lissage au laser de la surface et,
(B) un composé organique à base de silicium sur la surface ou dans les porosités proches de la surface de la matière minérale.

11. Procédé selon la revendication 10, **caractérisé en ce que** les cavités de surfaces réalisées au laser présentent une profondeur moyenne de 10 à 400 µm, en particulier de préférence de 20 à 200 µm.

12. Procédé selon la revendication 10 ou 11, **caractérisé en ce que** les cavités de surfaces réalisées au laser présentent un diamètre moyen de 5 à 900 µm, en particulier de préférence de 10 à 150 µm.

13. Procédé selon les revendications 10 à 12, **caractérisé en ce que** la surface présente au moins 2,5 millions de cavités de surface réalisées au laser par m².
